# EUROPEAN PATENT APPLICATION

(11) **EP 3 835 265 A1**
(43) Date of publication of application: **16.06.2021**
(21) Application number: 19216153.7
(22) Date of filing: 13.12.2019
(51) Int. Cl.: C02F 1/00, C02F 1/32

(54) **WATER TREATMENT DEVICE**

(71) Applicant: Watersprint AB, 223 81 Lund (SE)
(72) Inventor: UVNÄS, Krister, 247 35 SÖDRA SANDBY (SE); KOKKOLA, Linda, 223 52 LUND (SE); LINDQVIST, Mathias, 227 31 LUND (SE); EKHOLM, Sebastian, 268 77 KÅGERÖD (SE); RASMUSSEN, Peter, 2610 RØDOVRE (DK)
(74) Representative: AWA Sweden AB

(57) **Abstract**

A water emitter is presented. The water emitter comprises a water purifying module (100) a mouthpiece (300) and a control valve (200). The water purifying module (100) comprises a purifying chamber (102) having a chamber inlet and a chamber outlet, and a support body (104) comprising a UV light source configured to emit UV light into the purifying chamber (102). The mouthpiece (300) is fluidly connected to the chamber outlet. The control valve (200) having a control valve inlet (202) and a control valve outlet (204). The control valve outlet (204) is fluidly connected to the chamber inlet. The control valve inlet (202) is fluidly connectable to a fresh water conduit.

## Description

### Field of the invention

The invention relates to the field of purifying water, in particular it relates to a water emitter comprising the device for purifying water.

### Background art

Decontamination by means of ultra violet (UV) light is a well-established and reliable technique for use in systems for purifying fluids, in particular systems suitable for providing potable water. These systems are efficient and perform satisfactory without the use of any chemicals. UV light in fluid purification systems has the purpose of destroying the metabolic activity, mainly the DNA of bacteria, or other microorganisms being present in the water.

Typically, raw water is treated in a water supply plant whereafter this treated, refined water, frequently referred to as tap water, is made available to the end users via a water distribution system. In countries with rigorous water quality regulation, the term tap water is interchangeable with the term potable water. Elsewhere, tap water should undergo further treatment prior to being consumed. In both described cases, the tap water remains susceptible to contamination, in particular to biological infection. There have been examples when large communities and towns have had their water being infected even though their tap water on normal basis would be potable water.

Thus, there is room for improvements to systems for purifying fluids such as water.

### Summary of the invention

It is an object of the present invention to at least reduce the above stated issues by providing an improved water emitter for delivering potable water.

According to a first aspect there is provided a water emitter comprising: a water purifying module comprising: a purifying chamber having a chamber inlet and a chamber outlet, and a support body comprising a UV light source configured to emit UV light into the purifying chamber; a mouthpiece fluidly connected to the chamber outlet, and a control valve having a control valve inlet and a control valve outlet, wherein the control valve outlet is fluidly connected to the inlet and wherein the control valve inlet is fluidly connectable to a fresh water conduit.

The present water emitter provides a water providing system wherein the flow pressure on the water purifying module is lessened. As such, the water purifying module may be manufactured at lower cost, and the water emitter may be suitable for a wide variety of placements.

By the placement of the control valve in a flow direction before the water flow enters the water purifying module, a more precise control of the waterflow may be achieved. The placement of the control valve in relation to the purifying module provides the water emitter with a water flow control such that the water flow through the purifying module may be turned on and off. A water emitter is thus provided where cleaning or exchanging of the purifying module may be facilitated. This because the water flow can be turned off when the purifying chamber and or purifying module is to be replaced. Hence, efficiency of water purification in the long term may increase. By using the water emitter, it may become easier to supply clean potable water to end consumers

The control valve may be configured to reduce a fluid pressure on a control valve outlet side thereof substantially as compared to a fluid pressure on a control valve inlet side thereof. The control valve may be configured to reduce a fluid pressure on a control valve outlet side thereof to less than 15% of a fluid pressure on a control valve inlet side thereof. Preferably less than 10% of a fluid pressure on a control valve inlet side thereof. Most preferably less than 5% of a fluid pressure on a control valve inlet side thereof. This allows for using a water purifying module dimensioned for these relatively low pressures as compared with typical pressures in a fresh water conduit. A typical pressure in a fresh water conduit is more than 10 bar. Hence, a fluid pressure on the control valve outlet side may be less than 1.5 bar, less than 1 bar or even less than 0.5 bar. Accordingly, the amount of pressure the water purifying module is to be dimensioned for may be reduced. A less complicated and less costly water purifying module may be used.

The purifying chamber may be releasably mounted to the support body. By the purifying chamber being releasably mounted to the support body, cleaning of the purifying chamber may be facilitated. Further, the purifying chamber may be replaced in a simple manner. It is noted that when the control valve is set to not let water flow therethrough no water is flowing through the water purifying module. This will even further facilitate cleaning and/or replacement of the purifying chamber.

The purifying chamber may comprise a chamber ID identifying the purifying chamber. The water emitter may comprise a chamber identifier configured to check the chamber ID of the purifying chamber. The chamber identifier may be arranged in the support body of the water purifying module. The chamber ID may comprise data pertaining to for example a type of the purifying chamber, or which material it is made of, an internal reflective efficiency of the chamber etc. By identifying the purifying chamber, a high purification efficiency water purification system may be provided. This since the chamber identifier may determine if the mounted purifying chamber is of high quality enough to purify the flow of water to be flowing through the purifying chamber. The chamber identifier may comprise a control circuit configured to send a chamber ID signal to a signal receiver. Through identifying the mounted purifying chamber, the control valve may be configured to change the flow therethrough based on the chamber ID. The water emitter may be configured to turn off if there is no identification of any chamber.

The purifying chamber further may comprise a water filter being an integral part of the purifying chamber. The water filter may be configured to filter water flowing through the water filter. Any suitable water filter for filtering of potable water to be may be used for filtering water flowing through the water filter. For example, the water filter may be a mechanical filter configured to mechanically filter particles from the water flowing through the filter. Alternatively, or in combination, the water filter may be a chemical filter configured to chemically remove unwanted particles in the water flowing through the water filter. By providing the water filter as an integral part of the purifying chamber, a compact water emitter may be provided. Further, the manufacturing of the water filter and the purifying chamber may be done at a lower cost than manufacturing two separate devices. Less material may be used for the water emitter providing an environmentally friendly material use.

The water filter may be releasably connected to the purifying camber. As such the water filter may be exchanged separately from the purifying chamber, and vice versa.

The water emitter may comprise a filter module having a filter inlet and a filter outlet. The filter inlet may be fluidly connected to the control valve outlet and the filter outlet may be fluidly connected to the chamber inlet. The filter module may comprise a water filter configured to filter water flowing through the water filter. Any suitable water filter for filtering of potable water to be may be used for filtering water flowing through the water filter. For example, the water filter may be a mechanical filter configured to mechanically filter particles from the water flowing through the filter. Alternatively, or in combination, the water filter may be a chemical filter configured to chemically remove unwanted particles in the water flowing through the water filter.

The water filter of the filter module may be releasably mounted to the filter module. By the water filter being releasably mounted to the filter module, cleaning of the water filter may be facilitated. Further, the water filter may be exchanged in a simple manner when the control valve is set to not let water flow therethrough. As such, the water filter may be manufactured as a low-cost to produce model.

The water filter may comprise a filter ID identifying the filter. The water emitter may further comprise a filter identifier configured to check the filter ID of the filter. The filter identifier may be arranged in the filter module, the water purifying module or elsewhere in the water emitter. The filter ID may comprise data pertaining to a type of the water filter, or which material it is made of etc. By identifying the water filter, a high purification efficiency water purification system may be provided. This since the filter identifier may determine if the water filter is of high quality enough to filter the flow of water to be flowing through the water filter. The filter identifier may comprise a control circuit configured to send a filter ID signal to a signal receiver. Through identifying the water filter, the control valve may be configured to change the flow therethrough based on the filter ID. The water emitter may be configured to turn off if there is no identification of any filter, of if the identified filter is determined to be faulty etc.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
- Fig. 1: illustrates a water emitter.
- Fig. 2: Illustrates another water emitter.
- Fig. 3: illustrates a water emitter comprising a filter module.
- Fig. 4: illustrates an integrated water emitter.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

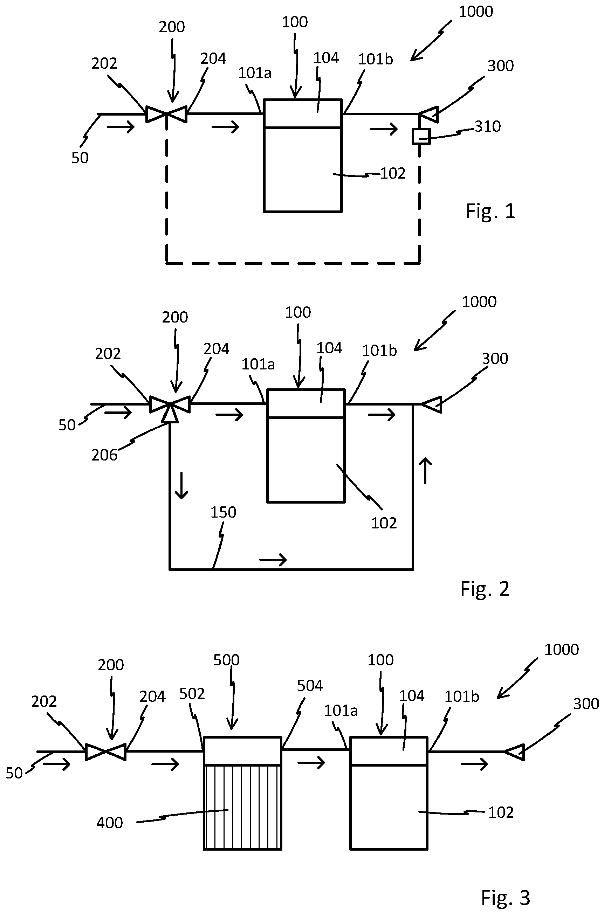

With reference to Fig. 1, a water emitter is disclosed. The water emitter 1000 comprises a water purifying module 100, a mouthpiece 300, and a control valve 200. The water purifying module 100 comprises a purifying chamber 102 having a chamber inlet and a chamber outlet, and a support body 104 comprising a UV light source configured to emit UV light into the purifying chamber 102. The mouthpiece 300 is fluidly connected to the chamber outlet. The control valve 200 having a control valve inlet 202 and a control valve outlet 204. The control valve outlet 204 is fluidly connected to the chamber inlet. The control valve inlet 202 is fluidly connectable to a fresh water conduit 50.

When the water emitter 1000 is in use, water from the fresh water supply conduit 50 enters the control valve 200. From the control valve 200, water is directed therefrom towards the water purifying module 100. After leaving the water purifying module 100, the water reaches the mouthpiece 300, which may be seen as an outlet of the water emitter 1000.

The control valve 200 comprises a control valve inlet 202 and a control valve outlet 204. The control valve inlet 202 is configured to be fluidly connectable to the fresh water supply conduit 50. During use of the water emitter 1000 the control valve inlet 202 is configured to receive a flow of water flowing in a direction form the fresh water supply conduit 50. A fluid pressure of the water in the fresh water supply conduit 50 is typically above 10 bars. The control valve 200 may be configured to reduce the fluid pressure for the water passing therethrough. Hence, the fluid pressure is lower on an outlet side of the control valve 200 than on an inlet side thereof. The reduced fluid pressure on the outlet side of the control valve 200 may be less than 15% of a fluid pressure on the inlet side of the control valve 200. The reduced fluid pressure on the outlet side of the control valve 200 may be less than 10% of a fluid pressure on the inlet side of the control valve 200. The reduced fluid pressure on the outlet side of the control valve 200 may be less than 5% of a fluid pressure on the inlet side of the control valve 200. The reduced fluid pressure on the outlet side of the control valve 200 may be less than 1.5 bar, less than 1 bar or even less than 0.5 bar.

The water emitter may comprise a flow controller 310 for controlling the control valve 200. The controller may control a flow rate of water leaving the control valve 200. The flow controller 310 may be arranged in close proximity of the mouthpiece 300. The flow controller 310 may comprise an optical sensor. The flow controller 310 may comprise an electrical switch, e.g. in the form of a button. The flow controller 310 may comprise an electrical attenuator. The flow controller 310 may comprise a mechanically operational lever.

The control valve 200 may be an electrically controlled valve. Hence, an electrical signal may be sent from the flow controller 310 to the control valve 200. The electrical signal may comprise information pertaining to a degree of opening of the control valve 200. The electrical signal may comprise information pertaining to setting the control valve 200 in an open state or in a closed state. An electrically controlled control valve 200 is especially useful in case the flow controller 310 comprises an optical sensor, an electrical switch and/or an electrical attenuator.

The control valve 200 may be a mechanically controlled valve. Hence, operation of the control valve 200 may be mechanically controlled via operation of the flow controller 310. A mechanically controlled control valve 200 is especially useful in case the flow controller 310 comprises a mechanically operational lever.

The water purifying module 100 comprises a purifying chamber 102 and a support body 104. The support body 104 is configured to support the purifying chamber 102. That is, the purifying chamber 102 is mounted to the support body 104. Preferably, the purifying chamber 102 is releasably mounted to the support body 104.

The control valve outlet 204 is fluidly connected to an inlet 101 a of the water purifying module 100. Hence, water, from the fresh water supply conduit 50 to be purified by the water purifying module 100, is entering the water purifying module 100 at the inlet 101 a thereof. The inlet 101a of the water purifying module 100 may be arranged at the support body 104.

The purifying chamber 102 comprises a chamber inlet and a chamber outlet.

The chamber inlet is fluidly connected to the inlet 101a of the water purifying module 100. The chamber inlet may be arranged at a bottom of the purifying chamber 102. The chamber outlet may be arranged at a top of the purifying chamber 102. When in use, the water to be purified enters the purifying chamber 102 at the chamber inlet and exits the purifying chamber 102 at the chamber outlet. The top of the purifying chamber 102 is preferably arranged opposite to the bottom of the purifying chamber 102. The purifying chamber 102 may be mounted to the support body 102 at the top of the purifying chamber 102. The terms top and bottom of the purifying chamber 102 is used. It to be understood that the use of top and bottom is not limiting the purifying chamber 102 to be oriented in a specific manner in space. Instead, the wording top and bottom are only to be indicating that these two portions of the purifying chamber 102 are opposite each other. The purifying chamber 102 may be cylindrical. The purifying chamber 102 may be circular cylindrical.

The chamber outlet is fluidly connected to an outlet 101b of the water purifying module 100. The outlet 101b of the water purifying module 100 may be arranged at the support body 104. The outlet 101b of the water purifying module 100 is fluidly connected to the mouthpiece 300.

When water enters the purifying chamber, the flow direction of the water is from the chamber inlet of the purifying chamber 102 to the chamber outlet of the purifying chamber 102. In case the chamber inlet and the chamber outlet are opposite each other the flow direction has a straight path from the chamber inlet to the chamber outlet. This may ensure an even flow of fluid through the purifying chamber 104. A straight flow path may improve the purification of the fluid due to even exposure of UV light.

The support body 104 comprises a UV light source. The UV light source is configured to emit UV light into the purifying chamber 102. Upon emitting UV-light into the purifying chamber 102, water in the purifying chamber 102 may be purified. The UV light source may comprise a plurality of UV LEDs. The UV light source may comprise a UV transparent window. Alternatively, or in combination, the purifying chamber 102 may comprise a UV transparent window. The UV transparent window is configured to prevent any water from coming into direct contact with the UV light source.

The UV light emitted by the UV light source may enter the purifying chamber 102 in the opposite direction to the flow path of the water passing through the purifying chamber 102. This may increase the decontamination ability of the water purifying module 100. This may also lower the needed power of the UV light source 104. This may prolong the lifetime of the UV light source 104.

The purifying chamber 102 may comprise an inside being lined with a layer of UV reflective material. The UV reflective material may be polytetrafluoroethylene, PTFE.

Over time, unwanted deposits may accumulate on the inside of the purifying chamber. As these deposits are unwanted, it is desirous to be able to clean or replace the purifying chamber 102. This is facilitated by the purifying chamber 102 being releasably mounted to the support body 104. The control valve 200 may be turned to an off mode when the purifying chamber 102 is cleaned or exchanged. By this, there is no flow of water complicating the cleaning or exchanging of the purifying chamber 102. Hence, maintenance of the water emitter 1000 may be facilitated.

The purifying chamber 102 may comprise a chamber ID. The chamber ID is identifying the purifying chamber 102. The chamber ID may comprise data pertaining to a type of chamber, a size of the chamber, or any other suitable information for identifying the purifying chamber 102. The purifying module 100 may comprise a chamber identifier configured to check the chamber ID of the purifying chamber 102. If a predetermined suitable purifying chamber 102 is identified as being mounted to the water emitter 1000, the water emitter 1000 may be run in a non-restricted mode. If a non-suitable purifying chamber 102 is identified as being mounted to the water emitter 1000, the water emitter 1000 may be run in a restricted mode. An example of a restricted mode may be to turn off the water emitter 1000. Another restricted mode may be to restrict a flow of water passing through the control valve 200 and thereby the flow of water passing through the water purifying module 100.

As is evident from Fig. 2 the water emitter 1000 may comprise a bypass 150 for water to bypass the purifying module 100. The bypass 150 may be achieved through the control valve 200 comprising a bypass outlet 206. The bypass outlet 206 may be configured to defer water coming into the control valve 200 to bypass the water purifying module 1000. The bypass 150 may be fluidly connected to the mouthpiece 300. The bypass 150 may be beneficial for water that is not meant to be potable water, such as for example water that is to not be used for drinking or food preparation. By the water emitter 1000 comprising the bypass 150, unnecessary purification of water may be avoided.

Now turning to Fig. 3, the water emitter 1000 may comprise a filter module 500 having a filter inlet 502, and a filter outlet 504. The filter inlet 502 is fluidly connected to the control valve outlet 204. The filter outlet 504 is fluidly connected to the inlet 101a of the water purifying module 100. The filter module 500 comprises a water filter 400. The water filter 400 is configured to filter water flowing through the water filter 400. Any suitable water filter 400 for filtering of potable water to be may be used for filtering water flowing through the water filter 400. The water filter may be a mechanical filter configured to mechanically filter particles from the water flowing through the water filter 400. Alternatively, or in combination, the water filter 400 may be a chemical filter configured to chemically filter unwanted substances in the water flowing through the water filter 400.

The water filter 400 may be releasably mounted to the filter module 500. By such a configuration, cleaning and/or exchanging of the water filter 400 may be facilitated.

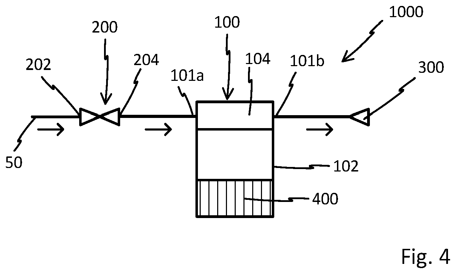

As is evident from Fig 4, the purifying chamber 102 may comprise the water filter 400. The water filter 400 may be formed as an integral part of the purifying chamber 102. By the water filter 400 being formed as an integral part of the purifying chamber 102 a cost-efficient water emitter 1000 may be achieved. Further, a compact water emitter 1000 may be achieved.

It is to be noted that the water filter 400 and the purifying chamber 102 may be formed as a modular design. Accordingly, the water filter 400 may be releasably mounted to the purifying chamber 102. Thereby, the water filter 400 may be exchanged separately from the purifying chamber 102 and vice versa.

The water filter 400 may comprise a filter ID identifying the filter 400. The filter ID may comprise data pertaining to a type of water filter 400, a size of the water filter 400, or any other suitable information for identifying the water filter 400.

The filter module 500 and/or the water purifying module 100 may comprise a filter identifier configured to check the filter ID of the water filter 400. If a predetermined suitable water filter 400 is identified as being mounted to the water emitter 1000, the water emitter 1000 may be run in a non-restricted mode. If a non-suitable water filter 400 is identified as being mounted to the water emitter 1000, the water emitter 1000 may be run in a restricted mode. One restricted mode may be to turn off the water emitter 1000. Another restricted mode may be to change the flow of water passing through the control valve 200 and thereby the flow of fluid passing through the filter module 500 and/or the water purifying module 100.

As is shown in Fig. 3, the filter module 500 may be arranged upstream the water purifying module 100. This arrangement is preferred since filtered water is then entering the water purifying module 100.

It is to be understood that the water emitter 1000 may be used for other purposes than purifying only water to be potable. By way of example, the water emitter 1000 may be connected to a water supply for a shower.

The person skilled in the art realizes that the present invention by no means is limited to the preferred embodiments described above. On the contrary, many modifications and variations are possible within the scope of the appended claims.

For example, the water emitter 1000 may comprise a filter sensor for detecting when the water filter 400 needs to be exchanged or cleaned. The water emitter 1000 may be turned off, if the water filter 400 is deemed too dirty to filter water in a proper way.

Further, the water emitter 1000 may comprise a chamber sensor for detecting when the chamber needs exchanged or cleaned. The water emitter 1000 may be turned off if the purifying chamber 102 is determined to be too dirty for purifying water.

It is further to be noticed that the bypass 150 may be comprised in any one of the disclosed embodiments of the water emitter 1000 and is not limited to the embodiment disclosed in Fig. 1.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A water emitter comprising:
a water purifying module (100) comprising:
a purifying chamber (102) having a chamber inlet and a chamber outlet, and
a support body (104) comprising a UV light source configured to emit UV light into the purifying chamber (102),
a mouthpiece (300) fluidly connected to the chamber outlet, and
a control valve (200) having a control valve inlet (202) and a control valve outlet (204),
wherein the control valve outlet (204) is fluidly connected to the chamber inlet and wherein the control valve inlet (202) is fluidly connectable to a fresh water conduit.

2. The water emitter according to claim 1, wherein the control valve (200) is configured to reduce a fluid pressure on a control valve outlet side thereof substantially as compared to a fluid pressure on a control valve inlet side thereof.

3. The water emitter according to claim 1 or 2, wherein the control valve (200) is configured to reduce a fluid pressure on a control valve outlet side thereof to less than 15%, preferably less than 10%, most preferably less than 5% of a fluid pressure on a control valve inlet side thereof.

4. The water emitter according to any one claims 1-3, wherein the purifying chamber (102) is releasably mounted to the support body (104).

5. The water emitter according to any one claims 1-4, wherein the purifying chamber (102) comprises a chamber ID identifying the purifying chamber (102), and wherein the water emitter further comprises a chamber identifier configured to check the chamber ID of the purifying chamber (102).

6. The water emitter according to any one claims 1-5, wherein the purifying chamber (102) further comprises a water filter (400) being an integral part of the purifying chamber (102), wherein the water filter (400) is configured to filter water flowing through the water filter (400).

7. The water emitter according to any one claims 1-6, further comprising a filter module (500) having a filter inlet (502) and a filter outlet (504), wherein the filter inlet (502) is fluidly connected to the control valve outlet (204) and the filter outlet (504) is fluidly connected to the chamber inlet, and wherein the filter module (500) comprises a water filter (400) configured to filter water flowing through the water filter (400).

8. The water emitter according to claim 7, wherein the water filter (400) of the filter module (500) is releasably mounted to the filter module (500).

9. The water emitter according to any one of claims 6-8, wherein the water filter (400) comprises a filter ID identifying the water filter (400), and wherein the water emitter further comprises a filter identifier configured to check the filter ID of the filter (400).
